# NEUE EUROPÄISCHE PATENTSCHRIFT

(11) **EP 2 004 991 B2**
(45) Veröffentlichungstag und Bekanntmachung des Hinweises auf die Entscheidung über den Einspruch: **26.10.2022**
(45) Hinweis auf die Patenterteilung: 26.12.2012
(21) Anmeldenummer: 07723881.4
(22) Anmeldetag: 02.04.2007
(51) Int. Cl.: F03D 9/00, F03D 11/00, F03D 11/04

(54) **WINDENERGIEANLAGE MIT STEUERBAREM DRACHEN**
WIND POWER PLANT COMPRISING A STEERABLE KITE
INSTALLATION À ÉNERGIE ÉOLIENNE À CERF-VOLANT POUVANT ÊTRE COMMANDÉ

(30) Priorität: 31.03.2006 DE 202006005389 U
(43) Veröffentlichungstag der Anmeldung: 24.12.2008
(73) Patentinhaber: SkySails Holding GmbH & Co. KG, 21079 Hamburg (DE)
(72) Erfinder: WRAGE, Stephen, 21079 Hamburg (DE); BRABECK, Stephan, 21079 Hamburg (DE)
(74) Vertreter: Glawe, Delfs, Moll
(86) Internationale Anmeldenummer: PCT/EP2007/002940
(87) Internationale Veröffentlichungsnummer: WO 2007/112993

(56) Entgegenhaltungen:
- EP-A1- 0 841 480
- WO-A-2004/104413
- WO-A-2007/000788
- WO-A-2007/034193
- WO-A1-2005/100148
- WO-A1-2007/112993
- DE-A1- 3 224 976
- DE-A1- 4 319 823
- JP-A- H04 237 877
- JP-A- 2004 232 461
- NL-C1- 1 017 171
- US-A- 3 924 827
- US-A- 4 076 190
- US-A- 4 124 182
- US-A1- 2002 033 019
- US-A1- 2002 040 948
- US-A1- 2002 040 948
- US-B1- 6 254 034
- US-B1- 7 188 808
- Schreiben der Anmelderin vom 09-1Ö-2ÖQ8 mit geänderten Ansprüchen
- Screen shot der Definition des Ausdrucks 'zyklisch? des "DUDEN"online Wörterbuchs
- Screenshot der Definition von "mechanischer Energie" aus einer Internetseite
- Englische Übersetzung der Zusammenfassung (Abstract) der C7; NL1017171 C1
- Textabschnitt aus der Veröffentlichung "Sustainable Energy Systems - 'KiWiGen' project''

## Beschreibung

Die Erfindung betrifft eine Vorrichtung zur Wandlung von Windströmungsenergie in mechanische Energie, umfassend ein mit einer Basisstation über ein Zugseil verbundenes Windangriffselement, einen an der Basisstation angeordneten Zugseilspeicher, der ausgebildet ist, um einen Zugseilabschnitt des Zugseils aufzunehmen, eine Steuerungsvorrichtung, die ausgebildet ist, um den Zugseilabschnitt zyklisch aus dem Zugseilspelcher zu fieren und zu holen, einen Energiewandler, der ausgebildet ist, um Energie aus der über das Zugseil vom Windangriffselement übertragenen Windströmungskralt und der Bewegung des aus dem Zugseilspeicher gefierten Zugseilabschnitt in eine elektrische, thermodynamische oder mechanische Energieform zu wandeln, eine Lenkvorrichtung, die ausgebildet ist, um eine Lenkbewegung um eine Achse oder in einer Richtung des Windangriffselements relativ zur Luftströmung zu erzeugen, eine Steuereinheit, die ausgebildet ist, um mittels der Lenkvorrichtung das Windangriffselement nach dem Fieren des Zugseilabschnitts in eine Flugposition mit niedriger Seilkraft zu bringen, und um das Windangriffselement nach dem Einholen des Zugseilabschnitts in eine Flugposition mit hoher Zugseilkraft zu bringen.

Eine solche Vorrichtung ist aus WO 00/40860 bekannt. Das Grundprinzip dieser vorbekannten Vorrichtung besteht darin, einen Schirm aus einer tiefen Position in eine höhere Position aufsteigen zu lassen und hierbei den Schirm horizontal versetzt über seinem Verankerungspunkt am Boden zu halten, so dass eine hohe Zugkraft im Halteseil des Schirms erzeugt wird. Diese Zugkraft dient dazu, eine als Haltepunkt des Schirms dienende Winde anzutreiben, mittels deren Rotation Generatoren angetrieben werden. Nach dem Fieren des Halteseils um eine bestimmte Länge wird der Schirm in eine Position etwa vertikal über dem Bodenhaltepunkt bzw. der Winde gesteuert und auf diese Weise die Seilzugkraft im Halteseil auf ein Minimum verringert. Das Halteseil wird wieder um die gefierte Seillänge eingeholt, der Schirm in eine horizontal versetzte Lage über dem Bodenhaltepunkt gesteuert und der Zyklus beginnt von Neuem. Aus der Differenz der Energie, die beim Fieren des Seils mit dem Generator erzeugt wird und zum Holen des Seils aufgebracht werden muss, ergibt sich eine aus der Windströmungsenergie gewandelte elektrische Energie am Ausgang des Generators.

Dieses Prinzip weist eine Reihe von Nachteilen auf, die seine praktische Umsetzung erschweren und die Erzielung eines wirtschaftlichen Wirkungsgrades erschweren.

Ein erster Nachteil liegt darin, dass durch den zyklischen Betrieb ein zyklischer Wechsel des Systems zwischen der Erzeugung und dem Verbrauch elektrischer Energie stattfindet. Dies kann einerseits Schwankungen bewirken, die eine Einspeisung einer etwa erzeugten elektrischen Energie in öffentliche oder private Netze nicht möglich macht. Weiterhin hat dieser zyklische Wechsel den Nachteil, dass das System regelmäßig wiederkehrend von einem Startvorgang des Fierens zu einem konstanten Fiervorgang übergeht. Dabei kann sich der Startvorgang aufgrund Massenträgheit des Gesamtsystems über einen weiten Seillängenbereich erstrecken, wodurch in jeden Zyklus verschiedene Betriebspunkte durchlaufen werden. Weiterhin werden sich verschiedene Zyklen hinsichtlich der Fiergeschwindigkeit unterscheiden, je nachdem, in welchem Betriebszustand das System zu Beginn des Fierens ist. Durch diese Einflussfaktoren ist es unmöglich, den Generator in wirtschaftlicher sinnvoller Weise auf die aus dem Windangriffselement wandelbare Energie abzustimmen, wodurch der Wirkungsgrad des Systems verringert wird und die Produktionskosten des Systems erhöht werden.

Ein weiterer Nachteil des Systems besteht darin, dass ein wirtschaftlicher Betrieb nur dann möglich ist, wenn das Halteseil über eine große Länge ausgefiert wird. Dies bedingt jedoch hohe Seilgewichte, die den Wirkungsgrad des Systems verringern. Weiterhin wird durch den großen gefierten Zugseilabschnitt ein starker Verschleiß des Halteseils erzeugt, der insgesamt eine Verschlechterung der Wirtschaftlichkeit des Systems zu Folge hat.

Die US 2002/0040948 A1 offenbart ein Windnutzungssystem mit einer Mehrzahl von selbsttragenden Profildrachen. Das System umfasst mehrere Profildrachen im Tandem, die an einem als Drehpunkt dienenden Kontrollgehäuse über Kontrollleinen und Unterstützungsleinen befestigt sind. Die Länge der Kontrollleinen kann gegenüber der Länge der Unterstützungsleinen geändert werden, um Angriffswinkel, Neigungswinkel, Flugrichtung und Fluggeschwindigkeit zu steuern.

Die EP 0841480 A1 offenbart eine Antriebsvorrichtung zum Antreiben einer Antriebswelle, wobei die Antriebsvorrichtung eine Anzahl von Drachen und wenigstens ein Zugkabel aufweist und wobei die Drachen derart angeordnet sind, dass sie einer aufsteigenden Bahn und einer absteigenden Bahn folgen, wobei die Drachen wenigstens auf der aufsteigenden Bahn mit dem wenigstens einen Zugkabel verbunden sind. Das Zugkabel greift an einem Antriebselement an, welches direkt oder indirekt mit der Antriebswelle verbunden ist. Ferner weist die Antriebsvorrichtung Einrichtungen zum Variieren der Position der Drachen auf.

Der Erfindung liegt die Aufgabe zugrunde, zumindest eines der Probleme der vorbekannten Vorrichtung zu verringern und eine sowohl in wirtschaftlicher Hinsicht als auch vom Gesichtspunkt des energetischen Wirkungsgrads betrachtete verbesserte Vorrichtung bereitzustellen.

Diese Aufgabe wird erfindungsgemäß gelöst durch eine Vorrichtung gemäß Anspruch 1 sowie ein Verfahren nach Anspruch 9. Erfindungsgemäß weist das Windangriffselement ein aerodynamisches Profil auf, welches bei Anströmung in einer Richtung senkrecht zum Zugseil eine Auftriebskraft in der Richtung des Zugseils erzeugt, die Lenkvorrichtung ausgebildet ist, um in einer zweiten Richtung oder um eine zweite Achse, die von der ersten Richtung bzw. Achse verschieden ist, eine Lenkbewegung des Windangriffselements relativ zur Luftströmung zu erzeugen und dass die Steuereinheit ausgebildet ist, um das Windangriffselement auf einer vorbestimmten Flugbahn in einer senkrecht zum Zugseil liegenden Flugebene zu bewegen.

Der Erfindung liegt die Erkenntnis zugrunde, dass eine Vielzahl von Problemen der vorbekannten Vorrichtung vermieden werden können, indem das Windangriffselement als aerodynamisches Profil mit Auftriebserzeugung bei Queranströmung ausgebildet ist und während des Ausfierens auf vorbestimmten Flugbahnen in der Ebene senkrecht zum Halteseil bewegt wird. Zu diesem Zweck wird erfindungsgemäß vorgesehen, dass die Lenkvorrichtung derart ausgebildet ist, dass sie zusätzlich zu der vorbekannten Steuerung des Windangriffselements am Ende des Fiervorgangs in die Vertikalposition über dem Bodenhaltepunkt auch eine Steuermöglichkeit in einer zweiten, hierzu verschiedenen Richtung in der Ebene senkrecht zum Halteseil möglich ist, wodurch die erfindungsgemäße Vorrichtung es erlaubt, während des Fierens des Halteseils mit dem Windangriffselement Flugfiguren auszuführen, die sich einerseits hinsichtlich ihrer Form und andererseits hinsichtlich ihrer Größe unterscheiden. Die erfindungsgemäße Vorrichtung ermöglicht hierdurch, dass beispielsweise bereits fest in einem Programmablauf vorgeschriebene vorbestimmte Flugbahnen während des Fierens des Halteseils abgeflogen werden oder das anhand eines Regelkreises vorbestimmte Flugbahnen während des Fierens abgeflogen werden. Auf diese Weise kann einerseits die Zugseilkraft erhöht werden und andererseits die Höhe der Zugseilkraft zu jedem Zeitpunkt des Fiervorgangs auf einen gewünschten Wert eingeregelt bzw. eingesteuert werden, um hierdurch einen optimierten Fiervorgang und einen optimierten Betrieb des Energiewandlers zu erreichen.

Die erfindungsgemäße Lenkvorrichtung kann beispielsweise durch mehrere zwischen dem Windangriffselement und der Basisstation verlaufende Steuerseile mit entsprechenden Hol- bzw. Fiereinrichtungen für diese Steuerseile bestehen. Die Lenkvorrichtung kann insbesondere auch eine zwischen Halteseil und Windangriffselement in der Nähe des Windangriffelements und in konstantem Abstand zu diesem angeordneten Steuerplattform umfassen, die mittels mehrerer Zug- und Steuerseile mit dem Windangriffselement verbunden ist und in der entsprechende Hol- bzw. Fiervorrichtungen für diese Zug- und Steuerseile angeordnet sind. Diese Fortbildung hat den Vorteil, dass das Windangriffselement mit einem einzigen Seil mit der Basisstation verbunden ist und die Steuerseile sich nur über eine kurze Distanz zwischen der Steuerplattform und dem Windangriffselement erstrecken.

Die Steuereinheit der erfindungsgemäßen Vorrichtung umfasst vorzugsweise eine elektronische Datenverarbeitungseinrichtung, die mittels eines Regelkreises oder mittels vorprogrammierter Datensätze zu bestimmten Flugfiguren und deren zeitlichem Ablauf die Vorrichtungen zum Holen und Fieren der Steuerseile bzw. der Zug- und Steuerseile entsprechend betätigt, um die Flugfiguren auszuführen.

Bei einer ersten vorteilhaften Ausführungsform sind die Steuereinheit und die Lenkeinrichtung ausgebildet, um das Windangriffselement während des Fierens des Zugseils auf einer kreisförmigen oder ovalen Flugbahn oder einer der Form einer liegenden Acht entsprechenden Flugbahn in der senkrecht zum Zugseil liegenden Flugebene zu bewegen.

Es hat sich gezeigt, dass diese Flugfiguren einerseits mit einer zuverlässigen und einfach aufgebauten Steuereinrichtung zu realisieren sind und andererseits mit diesen Flugfiguren eine optimale Seilzugkraft erzielt werden kann. Insbesondere kann es vorteilhaft sein, während des Fierens des Zugseils zwischen zwei Flugfiguren einmalig oder mehrmalig zu wechseln, um hierdurch die in verschiedenen Höhen vorherrschenden Windverhältnisse, die Fiergeschwindigkeit und die Geschwindigkeit des Windangriffselements entsprechend zu berücksichtigen. Die Flugfiguren selbst können zudem vorteilhafterweise zu der zuvor beschriebenen qualitativen Änderung auch quantitativ geändert werden, d.h. in ihrem Ausmaß während des Ausfierens des Zugseils verringert oder vergrößert werden.

Eine besonders bevorzugte Ausführungsform der Erfindung besteht darin, dass die Steuereinheit und die Lenkeinrichtung ausgebildet sind, um das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen zu bewegen.

Bei dieser Fortbildung wird das Windangriffselement vorzugsweise während des Fierens des Zugseils in solchen Flugbahnen bewegt, dass es permanent eine hohe, zur Energieerzeugung nutzbare Zugseilkraft erzeugt. Die Flugbahn des Windangriffselementes bewegt sich demnach während des Fierens des Zugseils nicht in die seitlichen und oberen Randbereiche des für eine hohe Zugseilkraft nutzbaren Windfensters, sondern bewegt sich vorzugsweise etwa um den Bereich der Mitte dieses Windfensters und stellt einen möglichst hohen horizontalen Versatz zwischen Windangriffselement und Basisstation bereit, ohne jedoch hierbei in eine zu geringe Flughöhe zu gelangen. Bei dieser Ausbildung der Vorrichtung tritt regelmäßig das Problem auf, dass das Windangriffselement zu Beginn des Fiervorgangs beschleunigt werden muss, wobei gegebenenfalls noch eine Massenträgheit bewegter und zu beschleunigender Elemente der Basisstation zusätzlich auftritt und das Windangriffselement nach Abschluss dieses Beschleunigungsvorgangs mit konstanter Geschwindigkeit bewegt wird und zum Ende des Fiervorgangs wieder abgebremst werden muss. Die erfindungsgemäße Lenkvorrichtung und Steuereinheit ermöglicht es nun, das Windangriffselement in für jeden dieser drei Flugzustände optimalen Flugbahnen zu bewegen, um hierdurch über den gesamten Fiervorgang Betriebszustände zu erzielen, die für die Energiewandlung aus der Zugseilkraft und Zugseilbewegung optimal sind. So kann beispielsweise eine besonders hohe Zugseilkraft während des Beschleunigungsvorgangs eingestellt werden, um diese instationäre Phase kurz zu halten, die Zugseilkraft dann nach Abschluss der Beschleunigungsphase zu verringern, um über einen langen Zeitraum eine Zugseilkraft und Fierbewegung zu ermöglichen, die an den Auslegungspunkt des Energiewandlers genau angepasst ist und die Zugseilkraft zum Ende des Fiervorgangs zu verringern, um Belastungen der gesamten Vorrichtung im Zusammenhang mit dem Bremsvorgang des Windangriffselements niedrig zu halten.

Dabei ist es insbesondere vorteilhaft, wenn die erfindungsgemäße Vorrichtung fortgebildet wird durch einen Sensor zur Erfassung der Zugseilkraft, der mit der Steuereinheit verbunden ist, um die gemessene Zugseilkraft an die Steuereinheit zu übermitteln, und wenn die Steuereinheit und die Lenkeinrichtung ausgebildet sind, um das Windangriffselement in der senkrecht zum Zugseil liegenden Flugebene während des Fierens des Zugseils in zumindest zwei aufeinanderfolgenden Flugbahnen so zu bewegen, dass die Zugseilkraft etwa konstant bleibt. Die Zugseilkraft ist eine wesentliche Einflussgröße auf den Vorgang der Energiewandlung und zudem relevant, um die Betriebssicherheit der gesamten Vorrichtung auch bei starken Windverhältnissen zu gewährleisten. Wie zuvor beschrieben, ist es insbesondere vorteilhaft, dass Windangriffselement auf bestimmten Flugbahnen zu bewegen, um hiermit die Zugseilkraft gezielt zu verändern oder gezielt konstant zu halten. Während des Großteils des Fiervorgangs, nach Abschluss der Beschleunigungsphase und vor Beginn der Bremsphase ist es insbesondere vorteilhaft, das Windangriffselement so zu steuern, dass die Zugseilkraft und die Fiergeschwindigkeit etwa konstant bleibt. Hierzu kann einerseits ein direkter Regelkreis mit der Eingangsgröße Zugseilkraft und einem Steuerbefehl als Ausgangsgröße erfolgen oder es kann beispielsweise in Abhängigkeit einer gemessenen Zugseilkraft oder einer gemessenen Veränderung der Zugseilkraft aus einer vorgespeicherten Tabelle mit unterschiedlichen Flugfiguren oder Flugbahnausmaßen eine passende Flugbahn bzw. Flugbahngröße ausgewählt werden und die entsprechenden Steuerungsmaßnahmen zur Ausführung dieser Flugbahn ausgewählt werden.

Eine zweite besonders bevorzugte Ausführungsform der erfindungsgemäßen Vorrichtung besteht darin, dass die Steuereinheit und die Lenkeinrichtung ausgebildet sind, um das Windangriffselement in der senkrecht zum Zugseil liegenden Flugebene auf einer in sich geschlossenen Flugbahn zu bewegen, und um das Windangriffselement während des Fierens des Zugseils in einem Flugbahnabschnitt mit hoher Seilzugkraft, und während des Einholens des Zugseils in einem Flugbahnabschnitt mit niedriger Seilzugkraft zu bewegen. Diese Fortbildung unterscheidet sich von den zuvor genannten Fortbildungen mit mehreren, sich zyklisch wiederholenden und in sich geschlossenen Flugbahnen während des Fiervorgangs insbesondere dadurch, dass das Windangriffselement während des Fiervorgangs lediglich einen Teilabschnitt einer einzigen in sich geschlossenen Flugbahn zurücklegt. Dieser Teilabschnitt während des Fiervorgangs entspricht demjenigen Flugbahnabschnitt, welcher bei der geflogenen Flugbahn die höchste Zugseilkraft erzeugt. Nach Durchlaufen dieses Teilabschnitts höchster Zugseilkraft gelangt das Windangriffselement in einen Flugbahnabschnitt mit niedriger Zugseilkraft, der typischerweise an einem seitlichen oder dem oberen Rand des nutzbaren Windfensters liegt. In diesem Flugbahnabschnitt wird das Zugseil dann wieder um diejenige Länge eingeholt, um die es zuvor gefiert worden ist, wobei selbstverständlich auch Differenzen zwischen Einhollänge und Fierlänge eingestellt werden können, beispielsweise um die Flugbahnen in einer größeren oder geringeren Höhe zu absolvieren und das Windangriffselement zu diesem Zweck aufsteigen oder absinken zu lassen. Die Fortbildung eignet sich insbesondere dazu, mit nur geringen Fierlängen bzw. Hollängen des Zugseils zu arbeiten, und hierbei einerseits einen höherfrequenten Wechsel zwischen Fierphase und Holphase zu erzielen als bei den zuvor beschriebenen Fortbildungsformen mit mehreren Flugbahnen während des Fiervorgangs. Dies ist insbesondere im Hinblick auf die nachfolgend beschriebenen Fortbildungen der Verstetigung der zyklisch erzeugten Energie vorteilhaft. Weiterhin wird hierdurch die Länge des ausgefierten Seilabschnitts verringert, was zu einer Vereinfachung des Aufbaus der gesamten Vorrichtung und zu einer Verringerung des Verschleißes am Zugseil führt. Ein wichtiger Unterschied dieser Fortbildung gegenüber den zuvor beschriebenen Fortbildungen mit mehreren Flugbahnen während des Fiervorgangs besteht darin, dass das Windangriffselement bei dieser Fortbildung vorzugsweise während jeder Flugbahn zumindest einmal in einen Bereich mit besonders niedriger Zugseilkraft gesteuert wird, um den Einholvorgang des Zugseils bei möglichst geringer Zugseilkraft ausführen zu können. Das heißt, im Gegensatz zu den vorherigen Ausführungsformen, strebt diese Ausführungsform nicht danach, das Windangriffselement an jedem Punkt der Flugbahn mit einer hohen Zugseilkraft zu fliegen, sondern nur während des bestimmten Flugbahnabschnitts, der für das Fieren des Zugseils benutzt wird, wohingegen in einem darauf folgenden Flugbahnabschnitt das Zugseil bei möglichst niedriger Zugseilkraft wieder eingeholt wird.

Die Ausführungsform kann weiter verbessert werden, indem die Steuereinheit und die Lenkeinrichtung ausgebildet sind, um das Windangriffselement in der senkrecht zum Zugseil liegenden Flugebene auf einem Kreis oder auf einem in horizontaler oder senkrechter Richtung liegenden Oval zu bewegen, wobei die Steuereinheit ausgebildet ist, um das Zugseil während einem oder beiden in horizontaler Richtung seitlichen Flugbahnabschnitten bzw. bei senkrechter Ovalerstreckung am höchsten Flugbahnabschnitt einzuholen und während der diese Flugbahnabschnitte verbindenden Flugbahnabschnitte zu fieren. Eine ovale oder kreisförmige Flugbahn bietet für diese Ausführungsform ein besonders günstiges Verhältnis zwischen den Flugbahnabschnitten, bei denen das Zugseil gefiert wird und somit Energie aus der Windströmungskraft gewonnen wird und den Flugbahnabschnitten, bei denen das Zugseil geholt wird. Ziel einer optimierten Flugbahn ist es, die Flugbahnabschnitte, während derer das Zugseil geholt wird, möglichst schnell und unter möglichst geringem Energieaufwand zu durchlaufen und hierbei die gesamte Zugseillänge einzuholen, die zuvor gefiert wurde, wohingegen die Flugbahnabschnitte, während derer gefiert wird, möglichst lange und unter möglichst hoher Zugseilkraft durchflogen werden sollten.

Alternativ zur zuvor beschriebenen Ausführungsform ist es auch vorteilhaft, wenn die Steuereinheit und die Lenkeinrichtung ausgebildet sind, um das Windangriffselement in der senkrecht zum Zugseil liegenden Flugebene auf einer in horizontaler oder senkrechter Richtung liegenden Acht zu bewegen, wobei die Steuereinheit ausgebildet ist, um das Zugseil während der in horizontaler Richtung seitlichen Flugbahnabschnitte bzw. im höchsten Flugbahnabschnitt einzuholen und während der diese Flugbahnabschnitte verbindenden, sich kreuzenden Flugbahnabschnitte zu fieren. Diese Form der Flugbahn weist einerseits den Vorteil auf, dass sie, wenn der Kreuzungspunkt etwa im idealen Windbereich liegt, sich auf einer langen Strecke der Flugbahn in der Nähe dieses idealen Windbereichs aufhält. Zudem wird bei der Flugbahn der liegenden bzw. stehenden Acht keine Verdrillung des Zugseils erzeugt, wodurch eine hierfür ansonsten erforderliche rotatorische Entkopplung, beispielsweise in Form eines Drehlagers, entfallen kann.

Dabei ist es insbesondere bevorzugt, wenn die Steuereinheit und die Lenkeinrichtung ausgebildet sind, um das Windangriffselement während der in horizontaler Richtung seitlichen Flugbahnabschnitte in Schwerkraftrichtung zu bewegen. Wie zuvor beschrieben, wird das Windangriffselement bei dieser Ausführungsform zumindest in einem seitlichen bzw. oberen Bereich an den Rand des nutzbaren Windfensters gesteuert, um die Zugseilkraft zu minimieren. An diesem Rand liegt regelmäßig eine weniger stabile Fluglage vor als im übrigen Bereich des Windfensters, so dass insbesondere bei Schwankungen der Windstärke oder Windrichtung eine Einschränkung der Steuermöglichkeit des Windangriffselements auftreten kann. Dies kann bevorzugt kompensiert werden, indem sich das Windangriffselement bei horizontal ausgerichteter Acht in diesen weniger stabilen Randbereichen in Schwerkraftrichtung bewegt und hierdurch eine Eigenstabilisierung durch die Schwerkraft erfährt. Auf diese Weise kann selbst bei vorübergehend beschränkter Steuerfähigkeit eine Fluggeschwindigkeit des Windangriffselements und damit eine zur Rückführung des Windangriffselements in Richtung der Mitte des nutzbaren Windfensters ausreichende Steuerfähigkeit erhalten bleiben.

Die erfindungsgemäße Vorrichtung, insbesondere die beiden zuvor beschriebenen, besonders vorteilhaften Ausführungsformen der erfindungsgemäßen Vorrichtung können weiter fortgebildet werden durch eine Vorrichtung zur Umwandlung der durch den Energiewandler erzeugten zyklischen Energie in konstante Energie, insbesondere ein Schwungrad, ein Druckspeicher, eine Hebevorrichtung zur temporären Speicherung der Energie in einer angehobenen Gewichtsmasse, zumindest ein Kondensator und/oder zumindest eine Batterie. In vielen Anwendungsfällen wir die Energiebereitstellung durch die erfindungsgemäße Vorrichtung, die einerseits durch die zyklische Schwankung, bedingt durch den zyklischen Wechsel zwischen Fieren und Holen des Zugseils und andererseits durch etwaige Schwankungen in der Zugseilkraft oder Zugseilfiergeschwindigkeit charakterisiert ist, sich nicht dazu eignen, um direkt in ein lokales oder öffentliches Stromnetz eingespeist zu werden oder in anderer Weise in dieser schwankenden Form für eine Weiterleitung oder einen Verbrauch eignen. Aus diesem Grund besteht eine wichtige Fortbildung der erfindungsgemäßen Vorrichtung darin, dass die Umwandlung der zyklischen Energiebereitstellung in eine konstante Energiebereitstellung erreicht wird, was durch verschiedene Verstetigungsmittel erzielt werden kann. Dabei sind die unterschiedlichen Verstetigungsmittel je nach Anwendungszweck, Energieform und je nach Investitionsvolumen passend auszuwählen.

Weiterhin ist es bevorzugt, die erfindungsgemäße Vorrichtung fortzubilden durch eine Vorrichtung zur Speicherung der durch den Energiewandler erzeugten Energie. Durch diese Fortbildung wird es ermöglicht, auch abseits eines Anschlusses an ein Energienetz die erfindungsgemäße Vorrichtung zu betreiben und hierbei die aus der Windströmungskraft gewandelte Energie vorübergehend zu speichern und hierauf folgend aus der Speichervorrichtung abzuführen, wenn diese gefüllt ist, beispielsweise durch eine Transportvorrichtung oder indem die gesamte erfindungsgemäße Vorrichtung mitsamt Speichervorrichtung zu einer Einspeisestelle in ein öffentliches oder privates Energienetz bewegt wird. So ist es insbesondere möglich, die erfindungsgemäße Vorrichtung auf einer Schwimmplattform, wie beispielsweise einem Schiff zu betreiben, welches nach einer gewissen Betriebsdauer an einer Einspeisestelle anlegt und die gespeicherte Energie abgibt.

Es ist weiterhin bevorzugt, wenn der Energiewandler einen pneumatischen oder hydraulischen Zylinder umfasst, der durch die Zugseilkraft und - bewegung betätigt wird und dessen Zylinderraum zur Erzeugung eines Fluiddrucks und einer Fluidströmung genutzt wird. Mit dieser Fortbildung wird eine konstruktiv einfache und robuste Energiewandlung erzielt. Die Fortbildung eignet sich insbesondere für die Ausführungsform der erfindungsgemäßen Vorrichtung, bei der das Windangriffselement auf einer geschlossenen Flugbahn in einer Ebene senkrecht zum Zugseil bewegt wird und das Zugseil hierbei wechselweise gefiert und geholt wird, je nachdem, ob gerade ein Flugbahnabschnitt mit hoher Zugseilkraft oder mit niedriger Zugseilkraft durchflogen wird.

Es ist insbesondere bevorzugt, wenn der Energiewandler ein elektrischer Generator ist, dessen Welle über eine Seilscheibe vom Zugseil angetrieben wird. Diese Ausführungsform ist einerseits robust und ermöglicht andererseits die Wandlung der Windströmungsenergie in eine für viele Zwecke verwendbare elektrische Energie.

Dabei kann die Vorrichtung vorzugsweise weitergebildet werden durch eine Vorrichtung zur Umwandlung der vom Generator erzeugten elektrischen Energie in chemische Energie, insbesondere eine Vorrichtung zur Herstellung von Synthesegas aus Kohlendioxid der Luft, eine Vorrichtung zur Erzeugung von destilliertem Wasser aus Meerwasser, eine Vorrichtung zur Erzeugung von synthetischem Öl aus Erdgas oder Biomasse.

Diese Ausführungsformen eignen sich nsbesondere, um einem lokalen Bedarf einer bestimmten Energieform nachzukommen oder um eine Energieform aus der elektrischen Energie zu erzeugen, die sich besonders leicht speichern lässt.

Weiterhin ist es vorteilhaft, wenn der Energiewandler ausgebildet ist, um Wasserstoff zu erzeugen.

Wiederum wird durch diese Fortbildung eine für vielerlei Zwecke verwendbare Energieform bereitgestellt, die zudem speicherbar ist.

Dabei ist es besonders vorteilhaft, die erfindungsgemäße Vorrichtung fortzubilden durch einen mit einem Druckspeicher verbundenen Kompressor, der durch das Zugseil angetrieben wird und der mit dem Energiewandler in solcher Weise verbunden ist, dass der erzeugte Wasserstoff vom Kompressor komprimiert und im Speicher komprimiert gespeichert wird. Durch diese Fortbildung wird die zur Speicherung des Wasserstoffs benötigte Kompression des erzeugten Wasserstoffgases direkt aus der mechanischen Energie der Zugseilkraft und Zugseilbewegung erzeugt und hierdurch Wirkungsgradverluste vermieden, wodurch der gesamte Wirkungsgrad der erfindungsgemäßen Vorrichtung, bilanziert über die Wandlung und Speicherung der Energie, verbessert wird.

Weiterhin ist es bevorzugt, wenn der Zugseilspeicher eine Vorrichtung zur Aufwicklung des Zugseils und eine Umlenkrolle umfasst, die auf einer relativ zum Boden beweglichen Plattform befestigt ist und mit welcher der Energiewandler gekoppelt ist zur Übertragung der Zugseilkraft und -bewegung. Auf diese Weise kann der Start und Landevorgang des Windangriffselements durch Betätigung der Vorrichtung zur Aufwicklung des Zugseils durchgeführt werden und der laufende Betrieb der erfindungsgemäßen Vorrichtung bei Stillstand der Aufwicklungsvorrichtung erfolgen, wobei die für die Energiewandlung erforderliche Übertragung der Kraft und Bewegung des Zugseils durch Bewegung der Plattform und Zug an der auf der Plattform befestigten Umlenkvorrichtung erfolgt. Die Plattform kann dabei in einer zyklischen, oszillierenden Hin- und Herbewegung geführt werden oder auf einer geschlossenen Bahn sich fortlaufend bewegen, beispielsweise einer Kreisbahn oder einer ovalen Bahn oder der Bahn einer Acht. Insbesondere kann die Bewegungsbahn der Plattform an die Bewegung des Windangriffselements angepasst werden oder an den Verlauf der Zugseilkraft.

Dabei ist es insbesondere bevorzugt, wenn die Plattform auf einem am Boden befestigten Schienenweg abrollt, der vorzugsweise gekrümmt, insbesondere in sich geschlossen verläuft.

Die erfindungsgemäßen Vorrichtung zeichnet sich aus durch zumindest ein weiteres zweites Zugseil mit einem entsprechend zweiten Windangriffselement,
- mit einem aerodynamischen Profil, welches bei Anströmung in einer Richtung senkrecht zum Zugseil eine Auftriebskraft in der Richtung des Zugseils erzeugt, und
- mit einer Lenkvorrichtung, die ausgebildet ist, das zweite Windangriffselement in einer ersten Richtung oder um eine erste Achse und in einer zweiten Richtung, die von der Richtung verschieden ist, oder um eine zweite Achse, die von der ersten Achse verschieden ist, eine Lenkbewegung des zweiten Windangriffselements relativ zur Luftströmung zu erzeugen,
wobei die Steuereinheit ausgebildet ist, um das zweite Windangriffselement auf einer vorbestimmten Flugbahn in einer senkrecht zum Zugseil liegenden Flugebene so zu bewegen, dass das Fieren und Einholen des zweiten Zugseils phasenversetzt zum ersten Zugseil erfolgt.

Die erfindungsgemäße Verwendung eines zweiten Windangriffselements ermöglicht es, dass die Leistung der erfindungsgemäßen Vorrichtung konstant gehalten wird, indem die beiden Windangriffselemente in solcher Weise phasenversetzt zueinander gefiert und geholt werden, dass zu jedem Zeitpunkt aus einem der beiden Windangriffselemente Energie erzeugt werden kann. Die beiden Windangriffselemente werden auf verschiedenen Flugbahnen bewegt. Diese Fortbildung kann insbesondere auch dahin fortentwickelt werden, dass eine Vielzahl von Windangriffselementen bereitgestellt sind, die in solcher Weise phasenversetzt zueinander auf vorbestimmten Flugbahnen bewegt werden, dass sich bei Überlagerung der aus den Zugseilkräften und Zugseilbewegungen der Windangriffselemente und der daraus gewonnenen Energie eine im Wesentlichen über die Zeit konstante Energiegewinnung ergibt.

Es ist bevorzugt, die erfindungsgemäße Vorrichtung nach einem Verfahren zur Wandlung von Windströmungsenergie in mechanische Energie zu betreiben, mit den Schritten
- zyklisches Fieren und Holen eines mittels eines Zugseils mit einem Zugseilspeicher verbundenen Windangriffselement,
- Wandeln der aus der Energie aus der über das Zugseil vom Windangriffselement übertragenen Windströmungskraft und der Bewegung des aus dem Zugseilspeicher gefierten Zugseilabschnitt in eine elektrische, thermodynamische oder mechanische Energieform zu wandeln,
- Steuern des Windangriffselement nach dem Fieren des Seilabschnitts in eine Flugposition mit niedriger Seilkraft, und
- Steuern des Windangriffselements nach dem Einholen des Seilabschnitts in eine Flugposition mit hoher Seilkraft,
dadurch gekennzeichnet, dass
- das Windangriffselement um eine zweite Achse oder Richtung, die von der ersten Achse oder Richtung verschieden ist gelenkt wird und dass
- das Windangriffselement auf einer vorbestimmten Flugbahn in einer senkrecht zum Zugseil liegenden Flugebene bewegt wird.

Zu den Details, Vorteilen und Beispielen der einzelnen Verfahrensschritten wird auf die zuvor beschriebenen Aspekte der jeweiligen erfindungsgemäßen Vorrichtung, die für die Ausführung des Verfahrens geeignet sind, verwiesen.

Dabei ist es bevorzugt, wenn sich das Windangriffselement während des Fierens des Zugseils auf einer kreisförmigen oder ovalen Flugbahn oder einer der Form einer liegenden oder stehenden Acht entsprechenden Flugbahn in der senkrecht zum Zugseil liegenden Flugebene bewegt.

Weiter ist es bevorzugt, wenn sich das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen bewegt.

Weiter ist es bevorzugt, wenn die Zugseilkraft erfasst wird, die gemessene Zugseilkraft an die Steuereinheit übermittelt wird und sich das Windangriffselement in der senkrecht zum Zugseil liegenden Flugebene während des Fierens des Zugseils in zumindest zwei aufeinanderfolgenden Flugbahnen so gesteuert wird, dass die Zugseilkraft etwa konstant bleibt.

Weiter ist es bevorzugt, wenn sich das Windangriffselement in der senkrecht zum Zugseil liegenden Flugebene auf einer in sich geschlossenen Flugbahn bewegt und
- während des Fierens des Zugseils in einen Flugbahnabschnitt mit hoher Seilzugkraft gesteuert wird, und
- während des Einholens des Zugseils in einen Flugbahnabschnitt mit niedriger Seilzugkraft gesteuert wird.

Weiter ist es bevorzugt, wenn das Windangriffselement in der senkrecht zum Zugseil liegenden Flugebene auf einem Kreis oder auf einem in horizontaler oder vertikaler Richtung liegenden Oval gesteuert wird und das Zugseil während der in horizontaler Richtung seitlichen bzw. dem oberen Flugbahnabschnitt eingeholt und während der diese Flugbahnabschnitte verbindenden Flugbahnabschnitte gefiert wird.

Weiter ist es bevorzugt, wenn das Windangriffselement in der senkrecht zum Zugseil liegenden Flugebene auf einer horizontaler oder vertikal ausgerichteten Acht gesteuert wird und das Zugseil während der in horizontaler Richtung seitlichen Flugbahnabschnitte bzw. dem oberen Flugbahnabschnitt eingeholt und während der diese Flugbahnabschnitte verbindenden, sich kreuzenden Flugbahnabschnitte gefiert wird.

Weiter ist es bevorzugt, wenn das Windangriffselement während der in horizontaler Richtung seitlichen Flugbahnabschnitte in Schwerkraftrichtung gesteuert wird.

Weiter ist es bevorzugt, wenn die vom Energiewandler erzeugte zyklische Energie in konstante Energie gewandelt wird.

Weiter ist es bevorzugt, wenn die durch den Energiewandler erzeugte Energie gespeichert wird.

Weiter ist es bevorzugt, wenn aus der Energie des bewegten Windangriffselement Wasserstoff erzeugt wird.

Weiter ist es bevorzugt, wenn der Wasserstoff mittels eines durch das Zugseil angetriebenen Kompressor komprimiert und in einem Speicher komprimiert gespeichert wird.

Die erfindungsgemäße Vorrichtung und das Verfahren eignen sich insbesondere zur Verwendung auf einem Schiff oder einer wasserbasierten Plattform. Hierbei kann einerseits die lokal auf dem Schiff bzw. der Plattform benötigte Energie durch die Vorrichtung bzw. das Verfahren bereitgestellt werden oder das Schiff bzw. die Plattform kann in Form einer Offshore-Windenergieanlage betrieben werden und die gewandelte Energie fortlaufend in ein Energienetz einspeisen oder zum späteren Abtransport und zur späteren Einspeisung zwischenspeichern.

Dabei ist es für die erfindungsgemäße Verwendung insbesondere bevorzugt, wenn das Schiff bzw. die wasserbasierte Plattform während der Energiegewinnung mit einer stationären Andockstation verbunden ist, über welche die gewonnene Energie in ein stationäres Energienetz eingespeist wird. Auf diese Weise wird vermieden, dass die Energie auf dem Schiff zwischengespeichert werden muss und gleichzeitig ermöglicht, dass die Vorrichtung bzw. das Verfahren auf einem Schiff installiert bzw. betrieben wird und somit mobil zu besonders energieertragreichen Regionen, in denen eine entsprechende Andockstation vorhanden ist, bewegt werden kann.

Bevorzugte Ausführungsformen der Erfindung werden anhand der Figuren beschrieben. Es zeigen:
- Fig. 1:: Eine perspektivische Ansicht einer ersten Ausführungsform der erfindungsgemäßen Vorrichtung von der Seite,
- Fig. 2.: Eine perspektivische Ansicht einer zweiten Ausführungsform der erfindungsgemäßen Vorrichtung von der Seite,
- Fig. 3.: Einen schematischen Ablauf der Flugpositionen gemäß einer ersten Ausführungsform des erfindungsgemäßen Verfahrens in Ansicht senkrecht zur Windrichtung,
- Fig. 4:: Eine Darstellung des Verlaufs der Energie über die Zeit bei einer Flugabfolge gemäß Fig. 3,
- Fig. 5:: Eine schematische Darstellung einer Flugabfolge einer zweiten Ausführungsform des erfindungsgemäßen Verfahrens in einer perspektivischen Ansicht etwa senkrecht zur Windrichtung,
- Fig. 6:: Die Flugbahn gemäß Fig. 5 in einer Ansicht in Windrichtung, und
- Fig. 7:: Eine Darstellung des Verlaufs der Energie über die Zeit gemäß der Flugbahn der Fig. 5 und 6.

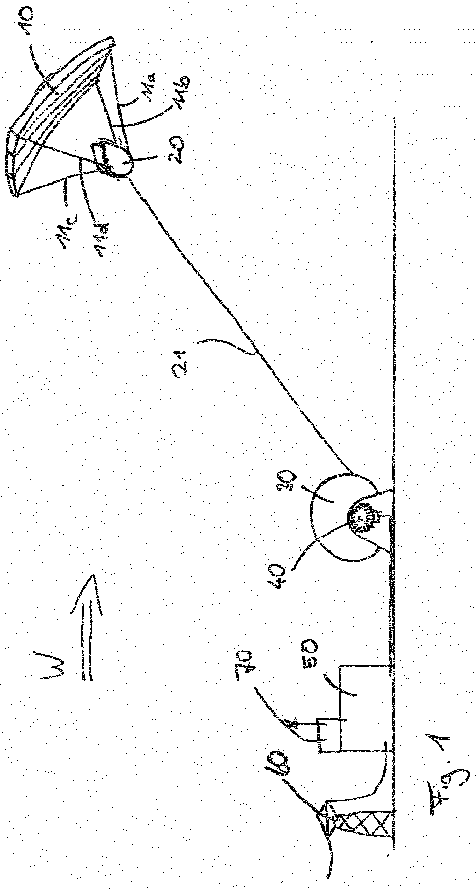

Fig. 1 zeigt einen Lenkdrachen 10, der an einer Lenkungsvorrichtung 20 mittels mehrerer Steuerseile 11 a-d befestigt ist. Die Lenkungsvorrichtung 20 ist mittels eines Zugseils 21 mit einer am Boden verankerten Zugseilwinde 30 verbunden.

Mit der Zugseilwinde 30 ist eine elektrische Kraftarbeitsmaschine 40 verbunden, die als Generator und als Motor geschaltet werden kann. Der Generator/Motor 40 ist mit einer Vorrichtung 50 zur Glättung der erzeugten Energie bzw. zur Zwischenspeicherung der erzeugten Energie 50 verbunden, die zur Einspeisung der gewonnen Energie an ein öffentliches Netzwerk 60 angeschlossen ist.

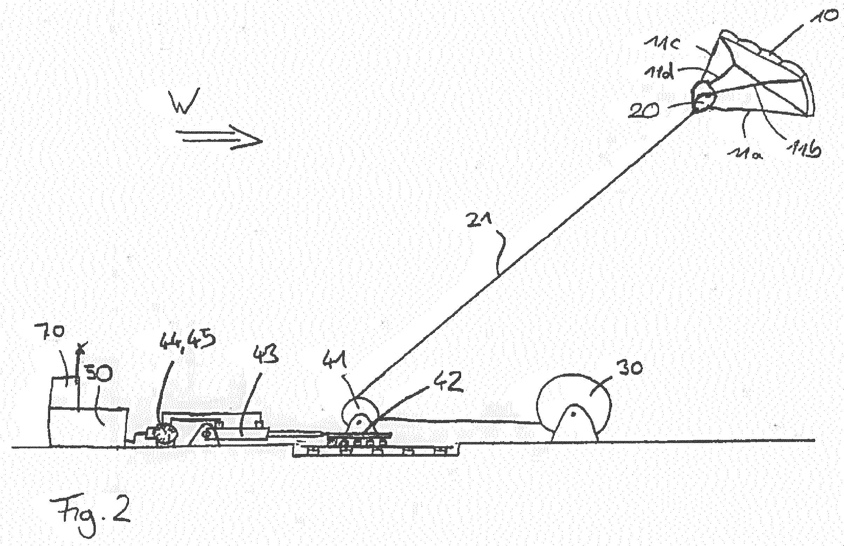

Fig. 2 zeigt eine zweite Ausführungsform der erfindungsgemäßen Vorrichtung. Wiederum ist ein Lenkdrachen 10 mittels Steuerseilen 11a-d mit einer Lenkungsvorrichtung 20 gekoppelt, die ihrerseits über ein Zugseil 21 mit einer Bodenstation verbunden ist. Das vom Drachen 10 kommende Zugseil 21 wird über eine Umlenkrolle 41 in einen horizontalen Verlauf umgelenkt und auf eine Zugseilwinde 30 geleitet.

Die Umlenkrolle 41 ist auf einem horizontal verschieblich gelagerten Laufwagen gelagert, der sich oszillierend zwischen zwei Endpositionen hin- und herbewegen kann.

Der Laufwagen 42 ist mit der Zylinderstange eines hydraulischen Zylinders 43 gekoppelt und bei Bewegung des Laufwagens 42 wird die Zylinderstange des Zylinders 43 aus- bzw. eingefahren.

Die Zylinderräume des Zylinders 43 sind ihrerseits mit einem Hydraulikmotor 44 verbunden, der aus der Bewegung des unter Druck gesetzten Fluids eine Rotationsbewegung erzeugt und an dem ein Generator 45 angeflanscht ist, der aus dieser Drehbewegung Strom erzeugt.

Der Generator 45 ist wiederum mit einer Vorrichtung zur Glättung der gewonnen Energie gekoppelt, welche mit dem öffentlichen Netz verbunden ist (nicht dargestellt in Fig. 2).

Zur Durchführung der Holbewegung an dem Laufwagen 42 kann der Hydraulikmotor 44 mitsamt dem Generator 45 als Elektromotor 45 und Hydraulikpumpe 44 umgeschaltet werden und der Hydraulikzylinder entsprechend betätigt werden.

Beide Ausführungsform der Fig. 1 und 2 umfassen weiterhin eine zentrale Steuerungsvorrichtung 70 bzw. 170 welche Steuerbefehle per Funkübertragung an die Lenkungsvorrichtung 20 übermittelt. Die Steuereinheit 70 ist mit der Glättungsvorrichtung 50 verbunden und erhält von dieser Informationen über den aktuellen Energieerzeugungs- bzw. Energieverbrauchszustand des Generators/Motors 40 bzw. 44 und 45. In Abhängigkeit dieser Information und weiterer Daten, wie beispielsweise Windrichtung, Windstärke, Drachenposition und -lage, veranlasst die Steuereinheit 70 die Lenkungsvorrichtung zur Ausführung nachfolgend genauer beschriebener bestimmter Richtungsänderungen des Lenkdrachens 10, um bestimmte Flugbahnen abzufliegen.

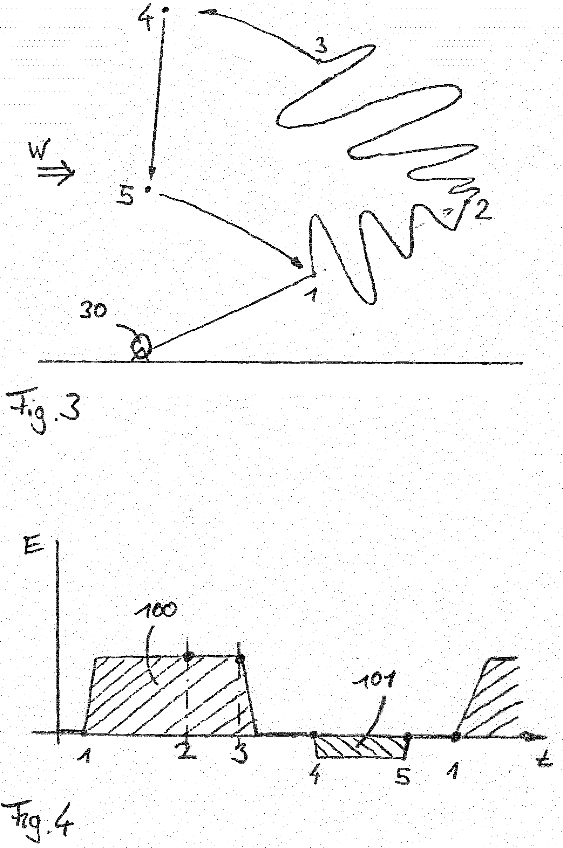

Figuren 3 und 4 zeigen einen ersten Ablauf des erfindungsgemäßen Energiegewinnungsverfahrens. Nach einem allgemeinen Start beginnt der Zyklus an einer Position 1 der Flugbahn. Ausgehend von dieser Position 1 wird das Zugseil 21 gefiert und mittels der Lenkungsvorrichtung 20 der Lenkdrachen 10 überlagert zu dieser Fierbewegung auf einer Flugbahn senkrecht zur Ebene des Zugseils bewegt, die beispielsweise bogenförmig oder in Form von Achten verlaufen kann. Die Amplitude der Bögen und ihre horizontale oder vertikale Ausrichtung wird in Abhängigkeit der Windrichtung so gewählt, dass sich aus der vom Drachen 10 erzeugten Zugseilkraft und Zugseilbewegung mit Hilfe des Generators eine konstante Energiemenge erzeugen lässt.

An einer Position 2 wird die Fiergeschwindigkeit des Zugseils reduziert und mittels der Lenkungsvorrichtung in eine Bewegungsrichtung umgelenkt, die grundsätzlich in eine Position vertikal oberhalb des Bodenbefestigungspunktes des Zugseils führt. Während dieser Bewegung wird der Lenkdrachen 10 wiederum auf schleifenförmigen Bahnen oder Achten oder dergleichen so gelenkt, dass eine weitere konstante Energieerzeugung erreicht wird. An einer bestimmten Position 3, an der die Zugseilkraft nicht mehr für die Energieerzeugung ausreichend ist, wird die Fierbewegung des Zugseils vollständig gestoppt und der Lenkdrachen in den Zenit etwa vertikal oberhalb des Bodenbefestigungspunktes gelenkt.

Wenn der Zenit in Position 4 erreicht ist, wird der Generator 40 als Motor geschaltet und das Zugseil unter Aufbringung von Energie bis zur Position 5 eingeholt. Da die Zugseilkraft in dieser Fluglage des Lenkdrachens 10 geringer ist als in der horizontal zum Bodenbefestigungspunkt versetzten Fluglage, ist die Energie, die zum Einholen der zuvor gefierten Zugseillänge erforderlich ist, geringer, als die Energie, die beim Fieren des Zugseils gewonnen wurde. Aus der Differenz der in Fig. 4 schraffierten Fläche 100 und der schraffierten Fläche 101 ergibt sich die bei jedem Zyklus des erfindungsgemäßen Verfahrens gewonnene Gesamtenergie.

Von Position 5 wird der Lenkdrachen 10 wiederum in horizontaler Richtung bis zur Position 1 geführt und der Zyklus beginnt von Neuem.

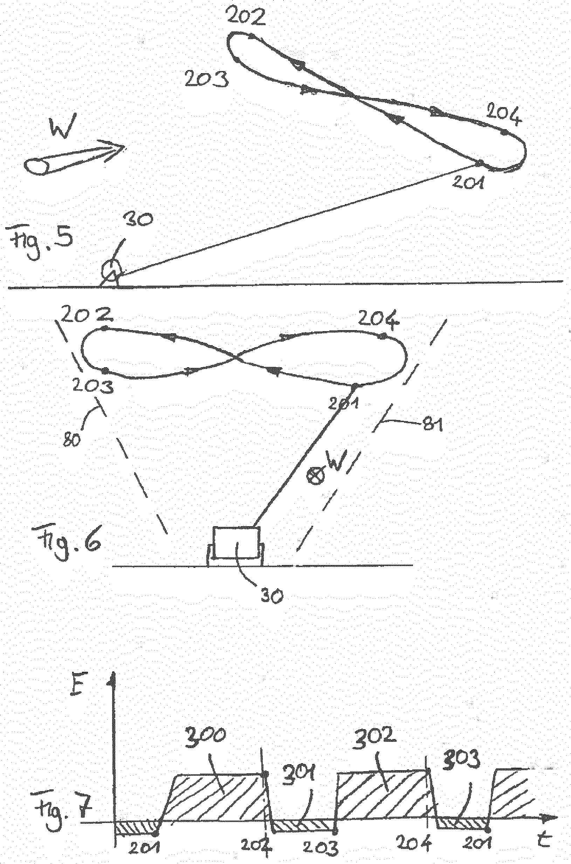

Die Fig. 5-7 erläutern eine zweite Ausführungsform des erfindungsgemäßen Energiegewinnungsverfahrens. Der Zyklus beginnt nach Ausfieren des Seils in einem Startvorgang an einer Position 201 einer Flugbahn, die im gezeigten Beispiel in Form einer Acht verläuft. Die Flugbahn in Form einer Acht liegt in einer Ebene senkrecht zum Zugseil und zugleich etwa senkrecht zur Windrichtung bzw. auf einer etwa sphärischen Fläche, die durch das Zugseil als Radius definiert wird.

Ausgehend von Position 1 wird der Lenkdrachen 10 durch das Fenster der maximalen Zugseilkraft bis zu einer Position 202 geführt und hierbei das Zugseil gefiert. Der Flugbahnabschnitt zwischen den Positionen 201 und 202 dient daher zur Energieerzeugung der Energiemenge 300 in Fig. 7.

An Position 202 hat der Lenkdrachen den äußersten Rand 80 des nutzbaren Windfensters erreicht und die Zugseilkraft ist minimal. Der Lenkdrachen wird nun in einer vertikalen Abwärtsschleife zu einer Position 203 geführt und das Zugseil hierbei unter Umschaltung des Generators in einen Motor um die Länge wiedereingeholt, um die es zuvor zwischen Position 201 und 202 gefiert worden ist. Hierbei wird, da die Zugseilkraft geringer ist als zwischen den Punkten 201 und 202, eine geringere Energiemenge 301 verbraucht als zuvor gewonnen.

Ausgehend von Punkt 203 wird der Lenkdrachen wiederum durch den Bereich der höchsten Zugseilkraft zu einer Position 204 geführt und hierbei gefiert. Der Lenkdrachen kreuzt dabei seine vorherige Flugbahn zwischen Punkt 201 und 202. Hierbei wird wiederum die Energiemenge 302 gewonnen, die typischerweise etwa der Energiemenge 300 entspricht.

An Position 204 hat der Lenkdrachen den gegenüberliegenden Rand 81 des nutzbaren Windfensters erreicht und die Zugseilkraft ist wiederum minimal. Der Lenkdrachen wird wiederum in einer Abwärtsschleife geführt und erreicht die Ausgangsposition 201. Zwischen diesen Positionen 204 und 201 wird das Zugseil wiederum um den Betrag eingeholt, um den es zwischen den Positionen 203 und 204 gefiert worden ist. Zum Einholen ist eine Energiemenge 303 nötig, die etwa der Energiemenge 301 entspricht. Der Zyklus beginnt nun von Neuem.

Aus der Addition der Energiemengen 300 und 302 und Subtraktion der Energiemengen 301 und 303 lässt sich die in jedem Zyklus gewonnene Gesamtenergie berechnen.

## Patentansprüche

1. Vorrichtung zur Wandlung von Windströmungsenergie in mechanische Energie, umfassend
- ein mit einer Basisstation über ein Zugseil (21) verbundenes Windangriffselement (10),
- einen an der Basisstation angeordneten Zugseilspeicher (30; 41, 42), der ausgebildet ist, um einen Zugseilabschnitt des Zugseils aufzunehmen,
- eine Steuerungsvorrichtung (70), die ausgebildet ist, um den Zugseilabschnitt zyklisch aus dem Zugseilspeicher zu fieren und zu holen,
- einen Energiewandler (40; 43), der ausgebildet ist, um Energie aus der über das Zugseil vom Windangriffselement übertragenen Windströmungskraft und der Bewegung des aus dem Zugseilspeicher gefierten Zugseilabschnitts in eine elektrische, thermodynamische oder mechanische Energieform zu wandeln,
- eine Lenkvorrichtung (20), die ausgebildet ist, um eine Lenkbewegung um eine erste Achse oder in einer ersten Richtung des Windangriffselements relativ zur Luftströmung zu erzeugen,
- eine Steuereinheit (70), die ausgebildet ist, um mittels der Lenkvorrichtung (20)
i. das Windangriffselement nach dem Fieren des Zugseilabschnitts in eine Flugposition mit niedriger Zugseilkraft zu bringen, und um
ii. das Windangriffselement nach dem Einholen des Zugseilabschnitts in eine Flugposition mit hoher Zugseilkraft zu bringen,
wobei
- das Windangriffselement (10) ein aerodynamisches Profil aufweist, welches bei Anströmung in einer Richtung senkrecht zum Zugseil eine Auftriebskraft in der Richtung des Zugseils erzeugt,
- die Lenkvorrichtung (20) ausgebildet ist, um in einer zweiten Richtung oder um eine zweite Achse, die von der ersten Richtung bzw. Achse verschieden ist, eine Lenkbewegung des Windangriffselements relativ zur Luftströmung zu erzeugen und dass
- die Steuereinheit (70; 170) ausgebildet ist, um das Windangriffselement auf einer vorbestimmten Flugbahn in einer senkrecht zum Zugseil liegenden Flugebene zu bewegen,
**gekennzeichnet durch** zumindest ein weiteres Zugseil mit einem entsprechend weiteren Windangriffselement,
- mit einem aerodynamischen Profil, welches bei Anströmung in einer Richtung senkrecht zum Zugseil eine Auftriebskraft in der Richtung des Zugseils erzeugt, und
- mit einer Lenkvorrichtung, die ausgebildet ist, das weitere Windangriffselement in einer ersten Richtung oder um eine erste Achse und in einer zweiten Richtung, die von der Richtung verschieden ist, oder um eine zweite Achse, die von der ersten Achse verschieden ist, eine Lenkbewegung des weiteren Windangriffselements relativ zur Luftströmung zu erzeugen,
wobei die Steuereinheit ausgebildet ist, um das weitere Windangriffselement auf einer vorbestimmten Flugbahn in einer senkrecht zum Zugseil liegenden Flugebene so zu bewegen, dass das Fieren und Einholen des weiteren Zugseils phasenversetzt zum ersten Zugseil erfolgt, wobei die beiden Windangriffselemente auf verschiedenen Flugbahnen bewegt werden.

2. Vorrichtung nach Anspruch 1,
**dadurch gekennzeichnet, dass** die Steuereinheit (70) und die Lenkeinrichtung (20) ausgebildet sind,
- um das Windangriffselement während des Fierens des Zugseils auf einer kreisförmigen oder ovalen Flugbahn (1-2) oder einer der Form einer liegenden oder stehenden Acht entsprechenden Flugbahn in der senkrecht zum Zugseil liegenden Flugebene zu bewegen und/oder
- um das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen (1-2) zu bewegen, wobei vorzugsweise mit der Steuereinheit ein Sensor zur Erfassung der Zugseilkraft verbunden ist, um die gemessene Zugseilkraft an die Steuereinheit zu übermitteln, und wobei die Steuereinheit und die Lenkeinrichtung ausgebildet sind, um das Windangriffselement in der senkrecht zum Zugseil liegenden Flugebene während des Fierens des Zugseils in zumindest zwei aufeinanderfolgenden Flugbahnen so zu bewegen, dass die Zugseilkraft etwa konstant bleibt.

3. Vorrichtung nach Anspruch 1,
- **dadurch gekennzeichnet, dass** die Steuereinheit und die Lenkeinrichtung ausgebildet sind, um das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen (1-2) zu bewegen, und
- **gekennzeichnet durch** einen Sensor zur Erfassung der Zugseilkraft, der mit der Steuereinheit verbunden ist, um die gemessene Zugseilkraft an die Steuereinheit zu übermitteln, und **dadurch gekennzeichnet, dass** die Steuereinheit und die Lenkeinrichtung ausgebildet sind, um das Windangriffselement in der senkrecht zum Zugseil liegenden Flugebene während des Fierens des Zugseils in zumindest zwei aufeinanderfolgenden Flugbahnen so zu bewegen, dass die Zugseilkraft etwa konstant bleibt.

4. Vorrichtung nach Anspruch 1 oder 2,
**dadurch gekennzeichnet, dass** die Steuereinheit (170) und die Lenkeinrichtung ausgebildet sind, um
- das Windangriffselement in der senkrecht zum Zugseil liegenden Flugebene auf einer in sich geschlossenen Flugbahn zu bewegen, und um das Windangriffselement
- während des Fierens des Zugseils in einem Flugbahnabschnitt (201-202, 203-204) mit hoher Seilzugkraft, und
- während des Einholens des Zugseils in einem Flugbahnabschnitt (202-203, 204-201) mit niedriger Seilzugkraft
zu bewegen,
wobei vorzugsweise die Steuereinheit und die Lenkeinrichtung ausgebildet sind, um das Windangriffselement in der senkrecht zum Zugseil liegenden Flugebene auf einem Kreis oder auf einem in horizontaler oder vertikaler Richtung liegenden Oval zu bewegen, wobei die Steuereinheit ausgebildet ist, um das Zugseil während einem oder beiden in horizontaler Richtung seitlichen Flugbahnabschnitten bzw. dem oberen Flugbahnabschnitt einzuholen und während der diese Flugbahnabschnitte verbindenden Flugbahnabschnitte zu fieren.

5. Vorrichtung nach Anspruch 1 oder 2,
**dadurch gekennzeichnet, dass** die Steuereinheit (170) und die Lenkeinrichtung ausgebildet sind, um
- das Windangriffselement in der senkrecht zum Zugseil liegenden Flugebene auf einer in sich geschlossenen Flugbahn zu bewegen, und um das Windangriffselement
- während des Fierens des Zugseils in einem Flugbahnabschnitt (201-202, 203-204) mit hoher Seilzugkraft, und
- während des Einholens des Zugseils in einem Flugbahnabschnitt (202-203, 204-201) mit niedriger Seilzugkraft
zu bewegen,
wobei vorzugsweise die Steuereinheit und die Lenkeinrichtung ausgebildet sind, um das Windangriffselement in der senkrecht zum Zugseil liegenden Flugebene auf einer in horizontaler oder vertikaler Richtung liegenden Acht zu bewegen, wobei die Steuereinheit ausgebildet ist, um das Zugseil während der in horizontaler Richtung seitlichen Flugbahnabschnitten bzw. dem oberen Flugbahnabschnitt einzuholen und während der diese Flugbahnabschnitte verbindenden, sich kreuzenden Flugbahnabschnitte zu fieren, wobei vorzugsweise die Steuereinheit und die Lenkeinrichtung ausgebildet sind, um das Windangriffselement während der in horizontaler Richtung seitlichen Flugbahnabschnitte in Schwerkraftrichtung zu bewegen.

6. Vorrichtung nach einem der vorhergehenden Ansprüche,
**gekennzeichnet durch** eine Vorrichtung zur Speicherung der durch den Energiewandler erzeugten Energie und/oder eine Vorrichtung zur Umwandlung der durch den Energiewandler erzeugten zyklischen Energie in konstante Energie, insbesondere ein Schwungrad, ein Druckspeicher, eine Hebevorrichtung zur temporären Speicherung der Energie in einer angehobenen Gewichtsmasse, zumindest ein Kondensator und/oder zumindest eine Batterie.

7. Vorrichtung nach einem der vorhergehenden Ansprüche,
**dadurch gekennzeichnet, dass** der Energiewandler
- einen pneumatischen oder hydraulischen Zylinder umfasst, der durch die Zugseilkraft und -bewegung betätigt wird und dessen Zylinderraum zur Erzeugung eines Fluiddrucks und einer Fluidströmung genutzt wird,
- ein elektrischer Generator ist, dessen Welle über eine Seilscheibe vom Zugseil angetrieben wird, wobei die Vorrichtung vorzugsweise eine Vorrichtung zur Umwandlung der vom Generator erzeugten elektrischen Energie in chemische Energie aufweist, insbesondere eine Vorrichtung zur Herstellung von Synthesegas aus Kohlendioxid der Luft, eine Vorrichtung zur Erzeugung von destilliertem Wasser aus Meerwasser, und/oder eine Vorrichtung zur Erzeugung von synthetischem Öl aus Erdgas oder Biomasse, und/oder
- ausgebildet ist, um Wasserstoff zu erzeugen, wobei die Vorrichtung vorzugsweise einen mit einem Speicher verbundenen Kompressor aufweist, der durch das Zugseil angetrieben wird und der mit dem Energiewandler in solcher Weise verbunden ist, dass der erzeugte Wasserstoff vom Kompressor komprimiert und im Speicher komprimiert gespeichert wird.

8. Vorrichtung nach einem der vorhergehenden Ansprüche,
**dadurch gekennzeichnet, dass** der Zugseilspeicher eine Vorrichtung zur Aufwicklung des Zugseils und eine Umlenkrolle umfasst, die auf einer relativ zum Boden beweglichen Plattform befestigt ist und mit welcher der Energiewandler gekoppelt ist zur Übertragung der Zugseilkraft und
- bewegung, wobei vorzugsweise die Plattform auf einem am Boden befestigten Schienenweg abrollt, der vorzugsweise gekrümmt, insbesondere in sich geschlossen, verläuft.

9. Verfahren zur Wandlung von Windströmungsenergie in mechanische Energie, mit den Schritten
- zyklisches Fieren und Holen eines mittels eines Zugseils mit einem Zugseilspeicher verbundenen Windangriffselement,
- Wandeln der aus der Energie aus der über das Zugseil vom Windangriffselement übertragenen Windströmungskraft und der Bewegung des aus dem Zugseilspeicher gefierten Zugseilabschnitt in eine elektrische, thermodynamische oder mechanische Energieform zu wandeln,
- Steuern des Windangriffselement nach dem Fieren des Seilabschnitts in eine Flugposition mit niedriger Seilkraft, und
- Steuern des Windangriffselements nach dem Einholen des Seilabschnitts in eine Flugposition mit hoher Seilkraft,
wobei
- das Windangriffselement um eine zweite Achse oder Richtung, die von der ersten Achse oder Richtung verschieden ist gelenkt wird und dass
- das Windangriffselement auf einer vorbestimmten Flugbahn in einer senkrecht zum Zugseil liegenden Flugebene bewegt wird, **gekennzeichnet durch** die Schritte
- zyklisches Fieren und Holen eines weiteren Windangriffselements mittels eines weiteren Zugseils,
wobei
- das weitere Windangriffselement um eine erste Achse oder Richtung und um eine zweite Achse oder Richtung, die von der ersten Achse oder Richtung verschieden ist, gelenkt wird, wobei
die Bewegung des weiteren Windangriffselements auf einer vorbestimmten Flugbahn in einer senkrecht zum Zugseil liegenden Flugebene so gesteuert wird, dass das Fieren und Einholen des weiteren Zugseils phasenversetzt zum ersten Zugseil erfolgt und wobei die beiden Windangriffselemente auf verschiedenen Flugbahnen bewegt werden.

10. Verfahren nach Anspruch 9,
**dadurch gekennzeichnet, dass** sich das Windangriffselement
- während des Fierens des Zugseils auf einer kreisförmigen oder ovalen Flugbahn oder einer der Form einer liegenden oder stehenden Acht entsprechenden Flugbahn in der senkrecht zum Zugseil liegenden Flugebene bewegt, und gegebenenfalls sich das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen bewegt,
- wobei vorzugsweise die Zugseilkraft erfasst wird, die gemessene Zugseilkraft an die Steuereinheit übermittelt wird und das Windangriffselement in der senkrecht zum Zugseil liegenden Flugebene während des Fierens des Zugseils in zumindest zwei aufeinanderfolgenden Flugbahnen so gesteuert wird, dass die Zugseilkraft etwa konstant bleibt.

11. Verfahren nach Anspruch 9,
**dadurch gekennzeichnet, dass**
- sich das Windangriffselement in der senkrecht zum Zugseil liegenden Flugebene während des Fierens des Zugseils in mehreren aufeinanderfolgenden, sich zyklisch wiederholenden und in sich geschlossenen Flugbahnen bewegt, und
- die Zugseilkraft erfasst wird, die gemessene Zugseilkraft an die Steuereinheit übermittelt wird und das Windangriffselement in der senkrecht zum Zugseil liegenden Flugebene während des Fierens des Zugseils in zumindest zwei aufeinanderfolgenden Flugbahnen so gesteuert wird, dass die Zugseilkraft etwa konstant bleibt.

12. Verfahren nach Anspruch 9,
**dadurch gekennzeichnet, dass** sich das Windangriffselement in der senkrecht zum Zugseil liegenden Flugebene auf einer in sich geschlossenen Flugbahn bewegt und
- während des Fierens des Zugseils in einen Flugbahnabschnitt mit hoher Seilzugkraft gesteuert wird, und
- während des Einholens des Zugseils in einen Flugbahnabschnitt mit niedriger Seilzugkraft gesteuert wird,
wobei vorzugsweise das Windangriffselement in der senkrecht zum Zugseil liegenden Flugebene auf einem Kreis oder auf einem in horizontaler oder vertikaler Richtung liegenden Oval oder auf einer horizontal oder vertikal ausgerichteten Acht gesteuert wird und das Zugseil während der in horizontaler Richtung seitlichen Flugbahnabschnitte bzw. dem oberen Flugbahnabschnitt eingeholt und während der diese Flugbahnabschnitte verbindenden, sich ggf. kreuzenden Flugbahnabschnitte gefiert wird, wobei vorzugsweise das Windangriffselement während der in horizontaler Richtung seitlichen Flugbahnabschnitte ggf. in Schwerkraftrichtung gesteuert wird.

13. Verfahren nach einem der vorhergehenden Ansprüche 9 bis 12,
**dadurch gekennzeichnet, dass**
- die vom Energiewandler erzeugte zyklische Energie in konstante
Energie gewandelt wird,
- die durch den Energiewandler erzeugte Energie gespeichert wird und/oder
- aus der Energie des bewegten Windangriffselements Wasserstoff erzeugt wird, und vorzugsweise der Wasserstoff mittels eines durch das Zugseil angetriebenen Kompressor komprimiert und in einem Speicher komprimiert gespeichert wird.

14. Verwendung einer Vorrichtung oder eines Verfahren nach einem der vorhergehenden Ansprüche auf einem Schiff oder einer wasserbasierten Plattform, insbesondere für lokal auf dem Schiff bzw. Plattform benötigte Energie, wobei vorzugsweise das Schiff bzw. die wasserbasierte Plattform während der Energiegewinnung mit einer stationären Andockstation verbunden ist, über welche die gewonnene Energie in ein stationäres Energienetz eingespeist wird.

15. Verwendung einer Andockstation als Basisstation einer Vorrichtung oder eines Verfahrens nach einem der vorhergehenden Ansprüche 1 bis 13, umfassend Mittel zur Aufrechterhaltung einer stationären Position gegenüber einem Meeresgrund, insbesondere Meeresgrundverankerungsmittel, und einen Energieübertragungsanschluss zum Empfang der mit der Vorrichtung bzw. dem Verfahren gewonnenen Energie.

## Claims

1. Device for converting wind flow energy into mechanical energy, comprising
- a wind engaging element (10) which is connected to a base station by a traction cable (21),
- a traction cable storage means (30; 41, 42) which is arranged at the base station and is configured to receive a portion of the traction cable,
- a control device (70) which is configured to ease out the portion of traction cable cyclically from the traction cable storage means and to pull it back in,
- an energy converter (40; 43) which is configured to convert energy from the wind flow force, transmitted by the wind engaging element via the traction cable, and from the movement of the portion of traction cable eased out from the traction cable storage means into an electric, thermodynamic or mechanical form of energy,
- a steering device (20) which is configured to produce a steering movement around a first axis or in a first direction of the wind engaging element relative to the air flow,
- a control unit (70) which is configured, by means of the steering device (20)
i. to bring the wind engaging element into a flight position with a low traction cable force after the portion of traction cable has been eased out, and
ii. to bring the wind engaging element into a flight position with a high traction cable force after the portion of traction cable has been pulled back in,
wherein
- the wind engaging element (10) has an aerodynamic profile which generates a lifting force in the direction of the traction cable when air flows onto said profile in a direction perpendicular to the traction cable,
- the steering device (20) is configured to produce a steering movement of the wind engaging element relative to the air flow in a second direction or around a second axis which is different from the first direction or the first axis, and that
- the control unit (70; 170) is configured to move the wind engaging element on a predetermined trajectory in a flight plane perpendicular to the traction cable,
**characterised by** at least one further traction cable with a corresponding further wind engaging element,
- having an aerodynamic profile which generates a lifting force in the direction of the traction cable when air flows onto said profile in a direction perpendicular to the traction cable, and
- having a steering device which is configured to produce the further wind engaging element in a first direction or around a first axis and in a second direction, which is different from the direction, or around a second axis which is different from the first axis, a steering movement of the further wind engaging element relative to the air flow,
the control unit being configured to move the further wind engaging element on a predetermined trajectory in a flight plane perpendicular to the traction cable such that the further traction cable is eased out and retrieved in a phase-shifted manner relative to the first traction cable, the two wind engaging elements being moved on different trajectories.

2. Device according to claim 1, **characterised in that** the control unit (70) and the steering device (20) are configured
- to move the wind engaging element, when the traction cable is eased out, on a circular or oval trajectory (1-2) or on a trajectory corresponding to the shape of a horizontal or vertical eight in the flight plane perpendicular to the traction cable, and/or
- to move the wind engaging element in the flight plane perpendicular to the traction cable, when the traction cable is eased out, in a plurality of successive, cyclically recurring and self-contained trajectories (1-2), a sensor for detecting the traction cable force preferably being connected to the control unit to transmit the measured traction cable force to the control unit, and the control unit and the steering device being configured to move the wind engaging element in the flight plane perpendicular to the traction cable, when the traction cable is eased out, in at least two successive trajectories such that the traction cable force remains approximately constant.

3. Device according to claim 1,
- **characterised in that** the control unit and the steering device are configured to move the wind engaging element in the flight plane perpendicular to the traction cable in a plurality of successive, cyclically recurring and self-contained trajectories (1-2) when the traction cable is eased out, and
- **characterised by** a sensor for detecting the traction cable force, which sensor is connected to the control unit to transmit the measured traction cable force to the control unit, and **characterised in that** the control unit and the steering device are configured to move the wind engaging element in the flight plane perpendicular to the traction cable, when the traction cable is eased out, in at least two successive trajectories such that the traction cable force remains approximately constant.

4. Device according to either claim 1 or claim 2, **characterised in that** the control unit (170) and the steering device are configured
- to move the wind engaging element in the flight plane perpendicular to the traction cable on a self-contained trajectory, and to move the wind engaging element
- when the traction cable is eased out, in a trajectory portion (201-202, 203-204) with a high cable tensile force, and
- when the traction cable is retrieved, in a trajectory portion (202-203, 204-201) with a low cable tensile force,
the control unit and the steering device preferably being configured to move the wind engaging element in the flight plane perpendicular to the traction cable on a circle or on a horizontally or vertically positioned oval, the control unit being configured to retrieve the traction cable during one or both horizontally lateral trajectory portions or during the upper trajectory portion and to ease out the traction cable during the trajectory portions connecting these trajectory portions.

5. Device according to either claim 1 or claim 2, **characterised in that** the control unit (170) and the steering device are configured
- to move the wind engaging element in the flight plane perpendicular to the traction cable on a self-contained trajectory, and to move the wind engaging element
- when the traction cable is eased out, in a trajectory portion (201-202, 203-204) with a high cable tensile force, and
- when the traction cable is retrieved, in a trajectory portion (202-203, 204-201) with a low cable tensile force,
the control unit and the steering device preferably being configured to move the wind engaging element in the flight plane perpendicular to the traction cable on a horizontally or vertically positioned eight, the control unit being configured to retrieve the traction cable during the horizontally lateral trajectory portions or during the upper trajectory portion and to ease out the traction cable during the intersecting trajectory portions which connect these trajectory portions, the control unit and the steering unit preferably being configured to move the wind engaging element in the direction of gravity during the horizontally lateral trajectory portions.

6. Device according to any one of the preceding claims, **characterised by** a device for storing the energy generated by the energy converter and/or by a device for converting the cyclical energy generated by the energy converter into constant energy, in particular a flywheel, a pressure accumulator, a lifting device for temporarily storing the energy in a raised mass weight, at least a capacitor and/or at least a battery.

7. Device according to any one of the preceding claims, **characterised in that** the energy converter
- comprises a pneumatic or hydraulic cylinder which is actuated by the force and movement of the traction cable and the cylinder chamber of which is used to generate a fluid pressure and a fluid flow,
- is an electrical generator, the shaft of which is driven by the traction cable via a pulley, the device preferably comprising a device for converting the electrical energy, generated by the generator, into chemical energy, in particular a device for producing synthetic gas from carbon dioxide in the air, a device for producing distilled water from salt water, and/or a device for producing synthetic oil from natural gas or biomass, and/or
- is configured to produce hydrogen, the device preferably having a compressor which is connected to a reservoir and is driven by the traction cable and is connected to the energy converter such that the generated hydrogen is compressed by the compressor and is stored in compressed form in the reservoir.

8. Device according to any one of the preceding claims, **characterised in that** the traction cable storage means comprises a device for winding up the traction cable and a deflection roller which is attached to a platform which can move relative to the ground and with which the energy converter is coupled to transfer the force and movement of the traction cable, the platform preferably rolling on a railway track which is attached to the ground and is preferably curved, in particular is self-contained.

9. Method for converting wind flow energy into mechanical energy, comprising the steps:
- cyclically easing out and pulling back in a wind engaging element connected to a traction cable storage means by a traction cable,
- converting the from the energy from the wind flow force transmitted by the wind engaging element via the traction cable and from the movement of the traction cable portion eased out from the traction cable storage means into an electrical, thermodynamic or mechanical form of energy to convert,
- directing the wind engaging element, after easing out the cable portion, into a flight position with a low cable force, and
- directing the wind engaging element, after retrieving the cable portion, into a flight position with a high cable force,
wherein
- the wind engaging element is steered around a second axis or in a direction which is different from the first axis or first direction, and that
- the wind engaging element is moved on a predetermined trajectory in a flight plane perpendicular to the traction cable,
**characterised by** the steps:
- cyclically easing out and pulling back in a further wind engaging element by means of a further traction cable,
wherein
- the further wind engaging element is steered around a first axis or in a first direction and around a second axis or in a second direction which is different from the first axis or first direction,
the movement of the further wind engaging element on a predetermined trajectory in a flight plane perpendicular to the traction cable being controlled such that the further traction cable is eased out and retrieved in a phase-shifted manner relative to the first traction cable and the two wind engaging elements being moved on different trajectories.

10. Method according to claim 9, **characterised in that** the wind engaging element
- moves on a circular or oval trajectory or on a trajectory corresponding to the shape of a horizontal or vertical eight in the flight plane perpendicular to the traction cable when the traction cable is eased out, and optionally the wind engaging element moves in the flight plane perpendicular to the traction cable, when the traction cable is eased out, in a plurality of successive, cyclically recurring and self-contained trajectories,
- the traction cable force preferably being detected, the measured traction cable force being transmitted to the control unit and the wind engaging element being directed in the flight plane perpendicular to the traction cable, when the traction cable is eased out, in at least two successive trajectories such that the traction cable force remains approximately constant.

11. Method according to claim 9, **characterised in that**
- the wind engaging element moves in the flight plane perpendicular to the traction cable, when the traction cable is eased out, in a plurality of successive, cyclically recurring and self-contained trajectories, and
- the traction cable force is detected, the measured traction cable force is transmitted to the control unit and the wind engaging element is directed in the flight plane perpendicular to the traction cable, when the traction cable is eased out, in at least two successive trajectories such that the traction cable force remains approximately constant.

12. Method according to claim 9, **characterised in that** the wind engaging element moves in the flight plane perpendicular to the traction cable on a self-contained trajectory and
- when the traction cable is eased out, the wind engaging element is steered into a trajectory portion with a high cable tensile force, and
- when the traction cable is pulled back in, the wind engaging element is steered into a trajectory portion with a low cable tensile force,
the wind engaging element preferably being steered in the flight plane perpendicular to the traction cable on a circle or on a horizontally or vertically positioned oval or on a horizontally or vertically aligned eight and the traction cable being pulled back in during the horizontally lateral trajectory portions or the upper trajectory portion and being eased out during the optionally overlapping trajectory portions which connect these trajectory portions, the wind engaging element preferably being optionally steered in the direction of gravity during the horizontally lateral trajectory portions.

13. Method according to any one of the preceding claims 9 to 12, **characterised in that**
- the cyclical energy generated by the energy converter is converted into constant energy,
- the energy generated by the energy converter is stored and/or
- hydrogen is produced from the energy of the moving wind engaging element, and the hydrogen is preferably compressed by a compressor driven by the traction cable and is stored in compressed form in a reservoir.

14. Use of a device or of a method according to any one of the preceding claims on a boat or a water-based platform, in particular for energy required locally on the boat or platform, during the energy production the boat or the water-based platform preferably being connected to a stationary docking station which feeds the generated energy into a stationary power supply network.

15. Use of a docking station as the base station of a device or method according to any one of the preceding claims 1 to 13, comprising means for maintaining a stationary position with respect to a seabed, in particular seabed anchoring means, and an energy transmission connection for receiving the energy generated by the device or method.

## Revendications

1. Dispositif servant à convertir de l'énergie éolienne en énergie mécanique, comprenant
- un élément de prise au vent (10) relié à une station de base par l'intermédiaire d'un câble de traction (21),
- une réserve de câble de traction (30 ; 41, 42) disposée au niveau de la station de base, laquelle réserve est réalisée pour recevoir une section de câble de traction du câble de traction,
- un dispositif de commande (70) qui est réalisé pour filer et haler cycliquement la section de câble de traction de la réserve de câble de traction,
- un convertisseur d'énergie (40 ; 43) qui est réalisé pour convertir l'énergie issue de la force éolienne transmise par l'élément de prise au vent par l'intermédiaire du câble de traction et issue du mouvement de la section de câble de traction filée de la réserve de câble de traction en une forme d'énergie électrique, thermodynamique ou mécanique,
- un dispositif de direction (20) qui est réalisé pour générer un mouvement de direction autour d'un premier axe ou dans une première direction de l'élément de prise au vent par rapport au courant d'air,
- une unité de commande (70) qui est réalisée pour, au moyen du dispositif de direction (20),
i. amener l'élément de prise au vent, après le filage de la section de câble de traction, dans une position de vol présentant une faible force de câble de traction, et pour
ii. amener l'élément de prise au vent, après le halage de la section de câble de traction, dans une position de vol avec une force de câble de traction élevée,
dans lequel
- l'élément de prise au vent (10) présente un profil aérodynamique qui génère une force ascensionnelle dans la direction du câble de traction lorsque l'air arrive dans une direction perpendiculaire au câble de traction,
- le dispositif de direction (20) est réalisé pour générer dans une deuxième direction ou autour d'un deuxième axe, qui sont différents respectivement de la première direction ou du premier axe, un mouvement de direction de l'élément de prise au vent par rapport au courant d'air, et
- l'unité de commande (70 ; 170) est réalisée pour déplacer l'élément de prise au vent sur une trajectoire de vol prédéterminée dans un plan de vol situé perpendiculairement au câble de traction,
**caractérisé par** au moins un autre câble de traction doté d'un autre élément de prise au vent correspondant,
- comprenant un profil aérodynamique qui génère une force ascensionnelle dans la direction du câble de traction lorsque l'air arrive dans une direction perpendiculaire au câble de traction, et
- comprenant un dispositif de direction qui est réalisé pour l'autre élément de prise au vent dans une première direction ou autour d'un premier axe et dans une deuxième direction qui est différente de la direction, ou autour d'un deuxième axe qui est différent du premier axe, pour générer un mouvement de direction de l'autre élément de prise au vent par rapport au courant d'air,
dans lequel l'unité de commande est réalisée pour déplacer l'autre élément de prise au vent sur une trajectoire de vol prédéterminée dans un plan de vol situé perpendiculairement au câble de traction de telle sorte que le filage et le halage de l'autre câble de traction sont effectués de manière déphasée par rapport au premier câble de traction, les deux éléments de prise au vent étant déplacés sur différentes trajectoires de vol.

2. Dispositif selon la revendication 1, **caractérisé en ce que** l'unité de commande (70) et le dispositif de direction (20) sont réalisés
- pour déplacer l'élément de prise au vent lors du filage du câble de traction sur une trajectoire de vol (1-2) circulaire ou ovale ou sur une trajectoire de vol correspondant à la forme d'un huit en position horizontale ou en position verticale dans le plan de vol situé perpendiculairement au câble de traction, et/ou
- pour déplacer l'élément de prise au vent dans le plan de vol situé perpendiculairement au câble de traction pendant le filage du câble de traction sur plusieurs trajectoires de vol (1-2) consécutives, se répétant de manière cyclique et fermées sur elles-mêmes, dans lequel de préférence un capteur pour détecter la force de câble de traction est relié à l'unité de commande afin de transmettre la force de câble de traction mesurée à l'unité de commande, et dans lequel l'unité de commande et le dispositif de direction sont réalisés pour déplacer l'élément de prise au vent dans le plan de vol situé perpendiculairement au câble de traction pendant le filage du câble de traction sur au moins deux trajectoires de vol consécutives de telle sorte que la force de câble de traction reste à peu près constante.

3. Dispositif selon la revendication 1,
- **caractérisé en ce que** l'unité de commande et le dispositif de direction sont réalisés pour déplacer l'élément de prise au vent dans le plan de vol situé perpendiculairement au câble de traction pendant le filage du câble de traction sur plusieurs trajectoires de vol (1-2) consécutives, se répétant de manière cyclique et fermées sur elles-mêmes, et
- **caractérisé par** un capteur servant à détecter la force de câble de traction, qui est relié à l'unité de commande, afin de transmettre la force de câble de traction mesurée à l'unité de commande, et **caractérisé en ce que** l'unité de commande et le dispositif de direction sont réalisés pour déplacer l'élément de prise au vent dans le plan de vol situé perpendiculairement au câble de traction pendant le filage du câble de traction sur au moins deux trajectoires de vol consécutives de telle manière que la force de câble de traction reste à peu près constante.

4. Dispositif selon la revendication 1 ou 2, **caractérisé en ce que** l'unité de commande (170) et le dispositif de direction sont réalisés pour
- déplacer l'élément de prise au vent dans le plan de vol situé perpendiculairement au câble de traction sur une trajectoire de vol fermée sur elle-même, et pour déplacer l'élément de prise au vent
- pendant le filage du câble de traction sur une section de trajectoire de vol (201-202, 203-204) avec une force de câble de traction élevée, et
- pendant le halage du câble de traction sur une section de trajectoire de vol (202-203, 204-201) avec une force de câble de traction faible, dans lequel de préférence l'unité de commande et
le dispositif de direction sont réalisés pour déplacer l'élément de prise au vent dans le plan de vol situé perpendiculairement au câble de traction sur un cercle ou sur un ovale se trouvant dans une direction horizontale ou verticale, dans lequel l'unité de commande est réalisée pour haler le câble de traction pendant une ou deux sections de trajectoire de vol latérales dans la direction horizontale ou sur la section de trajectoire de vol supérieure, et pour le filer pendant les sections de trajectoire de vol reliant lesdites sections de trajectoire de vol.

5. Dispositif selon la revendication 1 ou 2, **caractérisé en ce que** l'unité de commande (170) et le dispositif de direction sont réalisés pour
- déplacer l'élément de prise au vent dans le plan de vol situé perpendiculairement au câble de traction sur une trajectoire de vol fermée sur elle-même, et pour déplacer l'élément de prise au vent
- pendant le filage du câble de traction sur une section de trajectoire de vol (201-202, 203-204) avec une force de câble de traction élevée, et
- pendant le halage du câble de traction sur une section de trajectoire de vol (202-203, 204-201) avec une force de câble de traction faible,
dans lequel de préférence l'unité de commande et le dispositif de direction sont réalisés pour déplacer l'élément de prise au vent dans le plan de vol situé perpendiculairement au câble de traction sur un huit se trouvant dans une direction horizontale ou dans une direction verticale, dans lequel l'unité de commande est réalisée pour haler le câble de traction pendant les sections de trajectoire de vol latérales dans la direction horizontale ou pendant la section de trajectoire de vol supérieure, et pour le filer pendant les sections de trajectoire de vol qui se croisent et relient lesdites sections de trajectoire de vol, dans lequel de préférence l'unité de commande et le dispositif de direction sont réalisés pour déplacer l'élément de prise au vent pendant les sections de trajectoire de vol latérales dans la direction horizontale dans la direction de la force de gravité.

6. Dispositif selon l'une quelconque des revendications précédentes, **caractérisé par** un dispositif servant à stocker l'énergie générée par le convertisseur d'énergie et/ou par un dispositif servant à convertir l'énergie cyclique générée par le convertisseur d'énergie en une énergie constante, en particulier un volant d'inertie, un accumulateur de pression, un dispositif de levage servant à stocker de manière temporaire l'énergie dans une masse pondérale soulevée, au moins un condensateur et/ou au moins une batterie.

7. Dispositif selon l'une quelconque des revendications précédentes, **caractérisé en ce que** le convertisseur d'énergie
- comprend un cylindre pneumatique ou hydraulique qui est actionné par la force et le mouvement du câble de traction et dont la chambre de cylindre est utilisée pour générer une pression de fluide et un écoulement de fluide,
- est un générateur électrique dont l'arbre est entraîné par le câble de traction par l'intermédiaire d'une poulie, dans lequel le dispositif présente de préférence un dispositif servant à convertir l'énergie électrique générée par le générateur en une énergie chimique, en particulier un dispositif servant à fabriquer du gaz de synthèse à partir du dioxyde de carbone de l'air, un dispositif servant à générer de l'eau distillée à partir de l'eau de mer, et/ou un dispositif servant à générer de l'huile de synthèse à partir de gaz naturel ou de biomasse et/ou
- est réalisé pour générer de l'hydrogène, dans lequel le dispositif présente de préférence un compresseur relié à l'accumulateur, qui est entraîné par le câble de traction et qui est relié au convertisseur d'énergie de telle sorte que l'hydrogène produit est comprimé par le compresseur et est stocké dans l'accumulateur de manière comprimée.

8. Dispositif selon l'une quelconque des revendications précédentes, **caractérisé en ce que** la réserve de câble de traction comprend un dispositif servant à enrouler le câble de traction et une poulie de renvoi qui est fixée sur une plate-forme pouvant être déplacée par rapport au sol et est couplée au convertisseur d'énergie pour la transmission de la force et du mouvement du câble de traction, dans lequel de préférence la plate-forme roule sur une voie ferrée fixée au sol, qui s'étend de préférence de manière courbée, en particulier de manière fermée sur elle-même.

9. Procédé servant à convertir l'énergie éolienne en une énergie mécanique, comportant les étapes consistant à :
- filer et haler de manière cyclique un élément de prise au vent relié à une réserve de câble de traction au moyen d'un câble de traction,
- convertir le de l'énergie issue de la force éolienne transmise par l'élément de prise au vent par l'intermédiaire du câble de traction et issue du mouvement de la section de câble de traction filée depuis la réserve de câble de traction en une forme d'énergie électrique, thermodynamique ou mécanique covertir,
- commander l'élément de prise au cent après le filage de la section de câble dans une position de vol avec une force de câble faible, et
- commander l'élément de prise au vent après le halage de la section de câble dans une position de vol avec une force de câble élevée,
dans lequel
- l'élément de prise au vent est dirigé autour d'un deuxième axe ou dans une deuxième direction qui sont différents respectivement du premier axe ou de la première direction, et
- l'élément de prise au vent est déplacé sur une trajectoire de vol prédéterminée dans un plan de vol situé perpendiculairement au câble de traction,
**caractérisé par** les étapes consistant à :
- filer et haler de manière cyclique un autre élément de prise au vent au moyen d'un autre câble de traction,
dans lequel
- l'autre élément de prise au vent est dirigé autour d'un premier axe ou dans une première direction et autour d'un deuxième axe ou dans une deuxième direction, qui sont différents du premier axe ou de la deuxième direction, dans lequel
- le déplacement de l'autre élément de prise au vent est commandé sur une trajectoire de vol prédéterminée dans un plan de vol situé perpendiculairement au câble de traction de telle sorte que le filage et le halage de l'autre câble de traction sont effectués de manière déphasée par rapport au premier câble de traction, et dans lequel les deux éléments de prise au vent sont déplacés sur différentes trajectoires de vol.

10. Procédé selon la revendication 9, **caractérisé en ce que** l'élément de prise au vent
- se déplace pendant le filage du câble de traction sur une trajectoire de vol circulaire ou ovale ou sur une trajectoire de vol correspondant à la forme d'un huit horizontal ou vertical dans le plan de vol situé perpendiculairement au câble de traction, et l'élément de prise au vent se déplace éventuellement dans le plan de vol situé perpendiculairement au câble de traction pendant le filage du câble de traction sur plusieurs trajectoires de vol consécutives qui se répètent de manière cyclique et sont fermées sur elles-mêmes,
- dans lequel de préférence la force de câble de traction est détectée, la force de câble de traction mesurée est transmise à l'unité de commande, et l'élément de prise au vent est commandé dans le plan de vol situé perpendiculairement au câble de traction pendant le filage du câble de traction sur au moins deux trajectoires de vol consécutives de telle sorte que la force de câble de traction reste à peu près constante.

11. Procédé selon la revendication 9, **caractérisé en ce que**
- l'élément de prise au vent se déplace dans le plan de vol situé perpendiculairement au câble de traction pendant le filage du câble de traction sur plusieurs trajectoires de vol consécutives, qui se répètent de manière cyclique et sont fermées sur elles-mêmes,
- la force de câble de traction est détectée, la force de câble de traction mesurée est transmise à l'unité de commande, et l'élément de prise au vent est commandé dans le plan de vol situé perpendiculairement au câble de traction pendant le filage du câble de traction sur au moins deux trajectoires de vol consécutives de telle sorte que la force de câble de traction reste à peu près constante.

12. Procédé selon la revendication 9, **caractérisé en ce que** l'élément de prise au vent se déplace dans le plan de vol situé perpendiculairement au câble de traction sur une trajectoire de vol fermée sur elle-même, et
- est commandé pendant le filage du câble de traction sur une section de trajectoire de vol avec une force de câble de traction élevée, et
- est commandé pendant le halage du câble de traction sur une section de trajectoire de vol avec une force de câble de traction faible,
dans lequel de préférence l'élément de prise au vent est commandé dans le plan de vol situé perpendiculairement au câble de traction sur un cercle ou sur un ovale se trouvant dans une direction horizontale ou verticale ou sur un huit orienté de manière horizontale ou de manière verticale, et le câble de traction est halé pendant les sections de trajectoire de vol latérales dans la direction horizontale ou pendant la section de trajectoire de vol supérieure, et est filé pendant les sections de trajectoire de vol qui se croisent éventuellement et relient lesdites sections de trajectoire de vol, dans lequel de préférence l'élément de prise au vent est commandé, éventuellement dans la direction de la force de gravité, pendant les sections de trajectoire de vol latérales dans la direction horizontale.

13. Procédé selon l'une quelconque des revendications précédentes 9 à 12, **caractérisé en ce que**
- l'énergie cyclique générée par le convertisseur d'énergie est convertie en une énergie constante,
- l'énergie générée par le convertisseur d'énergie est stockée, et/ou
- de l'hydrogène est généré à partir de l'énergie de l'élément de prise au vent déplacé, et de préférence l'hydrogène est comprimé au moyen d'un compresseur entraîné par le câble de traction et est stocké de manière comprimée dans un réservoir.

14. Utilisation d'un dispositif ou d'un procédé selon l'une quelconque des revendications précédentes sur un bateau ou une plate-forme basée en mer, en particulier pour une énergie requise localement sur le bateau ou la plate-forme, dans lequel de préférence le bateau ou la plate-forme basée en mer est relié(e) pendant la production d'énergie à une station d'accueil stationnaire par l'intermédiaire de laquelle l'énergie produite est alimentée dans un réseau d'énergie stationnaire.

15. Utilisation d'une station d'accueil comme station de base d'un dispositif ou d'un procédé selon l'une quelconque des revendications précédentes 1 à 13, comprenant des moyens servant à maintenir une position stationnaire par rapport au fond de la mer, en particulier des moyens d'ancrage dans le fond de la mer, et un raccordement de transfert d'énergie servant à recevoir l'énergie obtenue par le dispositif ou le procédé.
